# FASCICULE DE BREVET EUROPEEN

(11) **EP 2 451 671 B1**
(45) Date de publication et mention de la délivrance du brevet: **05.06.2013**
(21) Numéro de dépôt: 10723207.6
(22) Date de dépôt: 06.04.2010
(51) Int. Cl.: B60K 31/04, B60W 30/16

(54) **PROCEDE DE CONTROLE D'UN SYSTEME DE REGULATION A CONTROLE DE DISTANCE, ET SYSTEME DE REGULATION ASSOCIE**
VERFAHREN ZUR STEUERUNG EINES ADAPTIVEN GESCHWINDIGKEITSREGELUNGSSYSTEMS UND ZUGEHÖRIGES STEUERSYSTEM
METHOD FOR CONTROLLING AN ADAPTIVE CRUISE CONTROL SYSTEM AND ASSOCIATED CONTROL SYSTEM

(30) Priorité: 08.07.2009 FR 0954705
(43) Date de publication de la demande: 16.05.2012
(73) Titulaire: Renault S.A.S., 92100 Boulogne-Billancourt (FR)
(72) Inventeur: MALLET, Mickael, F-78180 Montigny le Bretonneux (FR)
(86) Numéro de dépôt international: PCT/FR2010/050656
(87) Numéro de publication internationale: WO 2011/004083

(56) Documents cités:
- US-A1- 2004 119 333

## Description

La présente invention concerne les systèmes de régulation de vitesse à contrôle de distance, ou systèmes ACC (initiales anglo-saxonnes mises pour « Adaptive Cruise Control »), équipant certains véhicules automobiles.

Un système ACC permet, d'une part, au conducteur du véhicule automobile de sélectionner une vitesse de croisière à laquelle le véhicule va rouler sans que le conducteur n'ait à maintenir le pied sur l'accélérateur et, d'autre part, au véhicule de garder de manière automatique une distance de sécurité avec un véhicule précédant le véhicule du conducteur, à partir de la détection de l'environnement présent devant le véhicule.

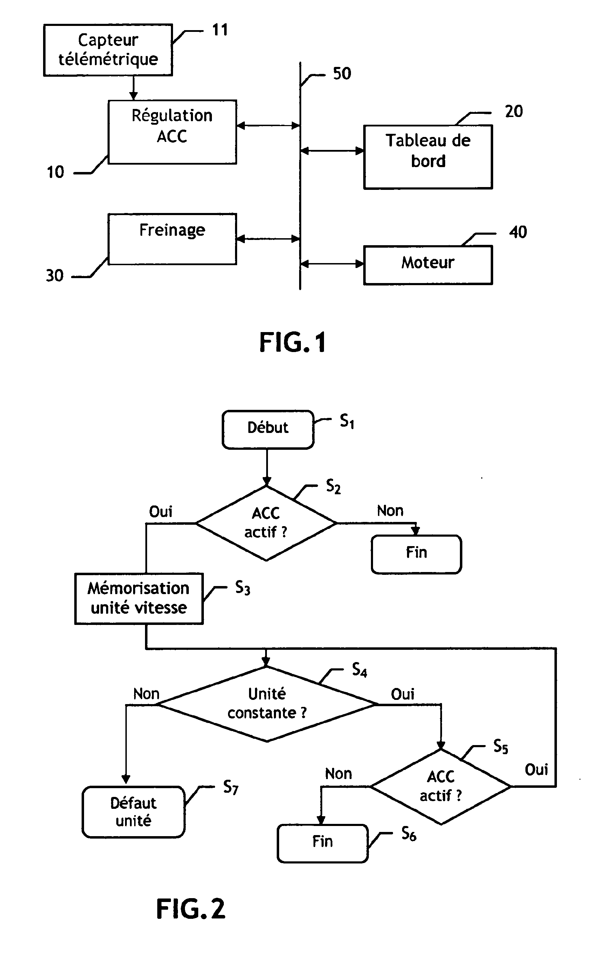

Pour ce faire, et comme représenté schématiquement sur la figure 1, un système ACC comporte classiquement un calculateur de régulation 10 relié aux autres calculateurs (contrôleur de tableau de bord 20, contrôleur du système de freinage 30 et contrôleur du moteur 40) équipant le véhicule automobile par un bus CAN 50 (initiales anglo-saxonnes mises pour « Controller Area Network »), ainsi qu'un capteur télémétrique 11, par exemple du type LIDAR (LIght Detection And Ranging) ou RADAR, apte à transmettre un signal à partir duquel le calculateur de régulation est capable de détecter la présence d'un véhicule, ou d'un obstacle, sur la scène routière située en avant du véhicule. Le rôle du système ACC étant d'adapter la vitesse du véhicule en fonction de la distance séparant ce véhicule de celui qui le précède, le système ACC commande automatiquement une décélération automatique du véhicule si la distance de sécurité est dépassée, puis une accélération automatique jusqu'à la vitesse de croisière si la voie se libère.

Pour autant, le système ACC n'a pas pour vocation de se substituer au conducteur, celui-ci devant toujours pouvoir reprendre le contrôle de la vitesse de son véhicule. Ainsi, la décélération automatique commandée par le système ACC est assez faible, et le conducteur doit être en mesure d'intervenir rapidement si la situation l'exige. Le système ACC est en conséquence adapté pour pouvoir transférer au contrôleur du tableau de bord 20, via le bus CAN 50, des requêtes d'alerte, le contrôleur du tableau de bord 20 commandant alors l'émission de signaux sonores et/ou visuels signifiant au conducteur qu'il est dans une situation demandant une vigilance particulière.

On comprend qu'un tel système, dont le but est d'assurer un confort de conduite, doit être assorti de mesures permettant de garantir la sécurité.

Certaines mesures sont liées aux conditions d'activation du système. Ainsi, le système ne doit être activé que sur une action volontaire du conducteur. Par ailleurs, le système ACC ne peut généralement pas être activé si le véhicule roule en-deçà d'une certaine vitesse, typiquement de l'ordre de 30 km/h. En outre, il peut être prévu d'interdire l'activation du système ACC lorsque la présence de pluie est détectée.

D'autres mesures sont relatives aux conditions de désactivation du système ACC. Ainsi, le système ACC se désactive dès que le conducteur appuie sur la pédale de frein. Par ailleurs, les consignes du système ACC sont suspendues tant que le conducteur appuie sur la pédale d'accélérateur. Dans certains cas, le système ACC peut également être désactivé suite à la détection de l'enclenchement du système d'essuie-glace.

Il reste cependant nécessaire de garantir le système contre l'apparition d'évènements indépendants de la volonté du conducteur ou des conditions environnementales telles que les conditions climatiques ou la détection de présence d'un véhicule à l'avant.

En particulier, comme le système ACC effectue une régulation à partir de la connaissance d'une vitesse de croisière choisie par le conducteur, il est important de s'assurer de la fiabilité de toute information relative à cette vitesse de croisière.

Aujourd'hui, le conducteur sélectionne la vitesse de croisière à partir de l'information de vitesse qui s'affiche sur le tableau de bord. Une fois sélectionnée, le calculateur 20 du tableau de bord transmet au calculateur 10 de régulation ACC, via le bus CAN 50, la vitesse de consigne correspondante.

En outre, il est prévu pour certains tableaux de bord une possibilité de commuter entre des vitesses affichées en km/heure ou des vitesses affichées en miles/heure. Dans ce cas, le calculateur 20 du tableau de bord doit transmettre au calculateur 10 de régulation ACC non seulement la vitesse de consigne, mais également l'unité de vitesse dans laquelle le tableau de bord a été configuré.

La configuration du tableau de bord par le conducteur ne peut s'effectuer que lorsque le véhicule est à l'arrêt. Ainsi, lorsque le système ACC est activé, l'unité de vitesse qui lui est transmise correspond théoriquement à celle qui a été configurée.

En pratique cependant, il existe un risque de corruption de la valeur d'unité transmise par le tableau de bord. Plus précisément, un basculement intempestif dans l'unité de vitesse alors que le système ACC est activé peut provoquer une accélération ou décélération intempestive, selon le sens du basculement.

Il en résulte une insuffisance en termes de sûreté de fonctionnement.

La présente invention a pour but de pallier cette insuffisance.

Ainsi, la présente invention a pour objet un procédé de contrôle d'un système de régulation de vitesse à contrôle de distance pour véhicule automobile, dans lequel un calculateur dudit système de régulation reçoit une valeur de vitesse de consigne et une information relative à l'unité de vitesse d'un calculateur de tableau de bord par l'intermédiaire d'un bus CAN, caractérisé en ce qu'il consiste à mémoriser l'information relative à l'unité de vitesse reçue au moment de l'activation du système de régulation, à surveiller, pendant toute la durée d'activation du système de régulation, tout changement de l'information relative à l'unité de vitesse reçue par rapport à l'information mémorisée, et à générer le cas échéant une information relative au défaut d'unité de vitesse.

La présente invention a également pour objet un système de régulation de vitesse à contrôle de distance pour véhicule automobile, comprenant un calculateur apte à recevoir une valeur de vitesse de consigne et une information relative à l'unité de vitesse d'un calculateur de tableau de bord par l'intermédiaire d'un bus CAN, caractérisé en ce qu'il est apte à mémoriser l'information relative à l'unité de vitesse reçue au moment de l'activation du système de régulation, à surveiller, pendant toute la durée d'activation du système de régulation, tout changement de l'information relative à l'unité de vitesse reçue par rapport à l'information mémorisée, et à générer le cas échéant une information relative au défaut d'unité de vitesse.

L'invention sera mieux comprise au vu de la description suivante faite en référence aux figures annexées, dans lesquelles :
- la figure 1, déjà décrite, illustre schématiquement la connexion de différents calculateurs équipant un véhicule automobile, dont le calculateur de régulation ACC et le calculateur du tableau de bord, au moyen d'un bus CAN ;
- La figure 2 décrit sous forme de synoptique, les différentes étapes préférentiellement mises en oeuvre dans le procédé selon l'invention.

En référence à la figure 2, on se place dans la condition initiale S₁ d'un véhicule pour lequel le système ACC est susceptible d'être activé. Le contrôle conformément à l'invention n'ayant d'intérêt que lorsque le système ACC a effectivement été activé, on vérifie au préalable que cette condition est remplie (étape S₂). Le cas échéant, le calculateur 10 de régulation reçoit donc les informations de vitesse de consigne sélectionnée par le conducteur et d'unité de vitesse émises par calculateur 20 du tableau de bord. Conformément à l'invention, l'information relative à l'unité de vitesse est mémorisée (étape S₃). Les étapes ₄ à S₅ servent à vérifier si l'unité de vitesse transmise par le calculateur 20 du tableau de bord reste bien constante pendant toute la durée d'activation du système ACC, en d'autres termes, si elle est toujours égale à l'unité de vitesse mémorisée à l'étape S₃. Dans le cas contraire, une information relative au défaut d'unité est générée par le calculateur 10 de régulation (étape S₇). La surveillance est stoppée dès lors que le système ACC est désactivé, quelle que soit la raison de cette désactivation (étape S₆).

Grâce à cette surveillance, le calculateur 10 de régulation peut décider de certaines actions permettant de garantir la sécurité. Dans le mode de réalisation préféré, le système ACC est désactivé dès qu'une information relative au défaut d'unité a été générée.

## Revendications

1. Procédé de contrôle d'un système de régulation de vitesse à contrôle de distance pour véhicule automobile, dans lequel un calculateur (10) dudit système de régulation reçoit une valeur de vitesse de consigne et une information relative à l'unité de vitesse d'un calculateur (20) de tableau de bord par l'intermédiaire d'un bus CAN (50), **caractérisé en ce qu'**il consiste à mémoriser (S₃) l'information relative à l'unité de vitesse reçue au moment de l'activation du système de régulation, à surveiller (S₄ à S₆), pendant toute la durée d'activation du système de régulation, tout changement de l'information relative à l'unité de vitesse reçue par rapport à l'information mémorisée, et à générer (S₇) le cas échéant une information relative au défaut d'unité de vitesse.

2. Procédé de contrôle selon la revendication 1, **caractérisé en ce qu'**il comprend une étape de désactivation du système de régulation dès qu'une information relative au défaut d'unité de vitesse a été générée.

3. Système de régulation de vitesse à contrôle de distance pour véhicule automobile, comprenant un calculateur (10) apte à recevoir une valeur de vitesse de consigne et une information relative à l'unité de vitesse d'un calculateur (20) de tableau de bord par l'intermédiaire d'un bus CAN (50), **caractérisé en ce qu'**il est apte à mémoriser l'information relative à l'unité de vitesse reçue au moment de l'activation du système de régulation, à surveiller, pendant toute la durée d'activation du système de régulation, tout changement de l'information relative à l'unité de vitesse reçue par rapport à l'information mémorisée, et à générer le cas échéant une information relative au défaut d'unité de vitesse.

4. Système de régulation selon la revendication 3, **caractérisé en ce que** le calculateur (10) dudit système désactive le système dès qu'une information relative au défaut d'unité de vitesse a été générée.

## Patentansprüche

1. Verfahren zur Kontrolle eines adaptiven Geschwindigkeitsregelungssystems für ein Kraftfahrzeug, bei dem ein Rechner (10) des Regelungssystems von einem Armaturenbrettrechner (20) über einen CAN-Bus (50) einen Sollgeschwindigkeitswert und eine Information bezüglich der Geschwindigkeitseinheit empfängt, **dadurch gekennzeichnet, dass** es darin besteht, die Information betreffend die Geschwindigkeitseinheit, die zum Zeitpunkt der Aktivierung des Regelungssystems empfangen wird, zu speichern (S₃), während der ganzen Aktivierungsdauer des Regelungssystems jede Änderung der empfangenen Information betreffend die gespeicherte Geschwindigkeitseinheit zu überwachen (S₄ bis S₆) und ggf. eine Information betreffend den Geschwindigkeitseinheitsfehler zu erzeugen (S₇) .

2. Kontrollverfahren nach Anspruch 1, **dadurch gekennzeichnet, dass** es einen Schritt der Deaktivierung des Regelungssystems enthält, sobald eine Information betreffend den Geschwindigkeitseinheitsfehler erzeugt wurde.

3. Adaptives Geschwindigkeitsregelungssystem für ein Kraftfahrzeug, das einen Rechner (10) enthält, der von einem Armaturenbrettrechner (20) über einen CAN-Bus (50) einen Sollgeschwindigkeitswert und eine Information betreffend die Geschwindigkeitseinheit empfangen kann, **dadurch gekennzeichnet, dass** es die Information betreffend die Geschwindigkeitseinheit speichern, die zum Zeitpunkt der Aktivierung des Regelungssystems empfangen wird, während der ganzen Aktivierungsdauer des Regelungssystems jede Änderung der empfangenen Information betreffend die Geschwindigkeitseinheit bezüglich der gespeicherten Information überwachen und ggf. eine Information betreffend den Geschwindigkeitseinheitsfehler erzeugen kann.

4. Regelungssystem nach Anspruch 3, **dadurch gekennzeichnet, dass** der Rechner (10) des Systems das System deaktiviert, sobald eine Information betreffend den Geschwindigkeitseinheitsfehler erzeugt wurde.

## Claims

1. Method for controlling a speed regulating system with distance control for motor vehicle, in which a computer (10) of said regulating system receives a speed setting value and an information item relating to the speed unit of a dashboard computer (20) by way of a CAN bus (50), **characterized in that** it consists in storing (S₃) the information item relating to the speed unit received at the moment of the activation of the regulating system, in monitoring (S₄ to S₆), throughout the duration of activation of the regulating system, any change of the information item relating to the speed unit received with respect to the information item stored, and in generating (S₇) if appropriate an information item relating to the speed unit defect.

2. Method of control according to Claim 1, **characterized in that** it comprises a step of deactivating the regulating system as soon as an information item relating to the speed unit defect has been generated.

3. Speed regulating system with distance control for motor vehicle, comprising a computer (10) able to receive a speed setting value and an information item relating to the speed unit of a dashboard computer (20) by way of a CAN bus (50), **characterized in that** it is able to store the information item relating to the speed unit received at the moment of the activation of the regulating system, to monitor, throughout the duration of activation of the regulating system, any change of the information item relating to the speed unit received with respect to the information item stored, and to generate if appropriate an information item relating to the speed unit defect.

4. Regulating system according to Claim 3, **characterized in that** the computer (10) of said system deactivates the system as soon as an information item relating to the speed unit defect has been generated.
